# EUROPÄISCHE PATENTSCHRIFT

(11) **EP 0 375 793 B1**
(45) Veröffentlichungstag und Bekanntmachung des Hinweises auf die Patenterteilung: **26.05.1993**
(21) Anmeldenummer: 88121677.4
(22) Anmeldetag: 24.12.1988
(51) Int. Cl.: H02J 9/06

(54) **Stromversorgungsschaltung mit Netzausfall-Überbrückungsspeicher**
Power supply circuit with a power interruption back-up battery
Circuit d'alimentation électrique avec alimentation de secours en cas de coupure de courant

(43) Veröffentlichungstag der Anmeldung: 04.07.1990
(73) Patentinhaber: DIEHL GMBH & CO., 90478 Nürnberg (DE)
(72) Erfinder:
(74) Vertreter: Hofmann, Gerhard, Dipl.-Ing. Patentassessor

(56) Entgegenhaltungen:
- US-A- 4 354 118
- US-A- 4 704 542
- Electronic Engineering vol. 51, no. 624, Juni 1979, LONDON GB Seite 26 - 27; T. AUSTIN: "No-break battery back-up with automatic shut-off"
- Electronics International vol. 50, no. 3, 03 Februar 1977, NEW YORK USA Seite 109 RAYMOND N. BENNETT: "2.4-V battery backup protects microprocessor memory"

## Beschreibung

Die Erfindung betrifft eine Stromversorgungsschaltung gemäß dem Oberbegriff des Anspruches 1.

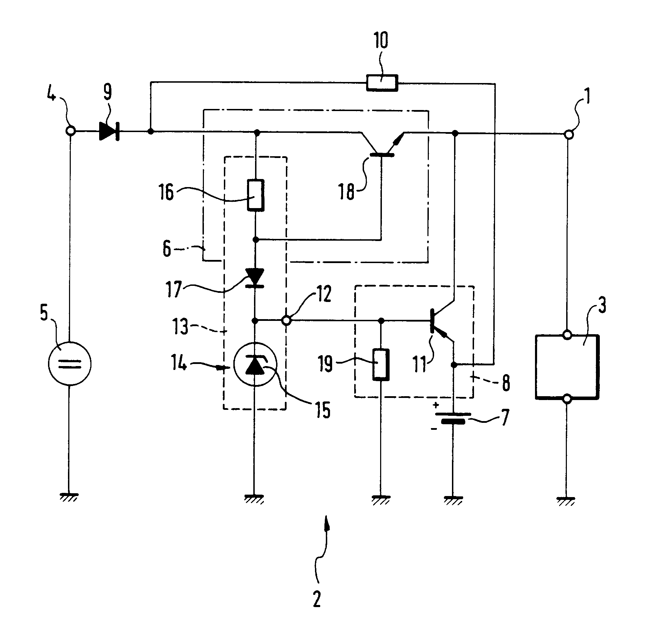

Eine derartige Schaltung ist aus der US-A 4,704,542 bekannt. Sie stellt insofern eine Weiterbildung der in Bild 9 auf Seite 106 in ELEKTRONIK, Heft 13 vom 24.06.1988, gezeigten Schaltung dar, als die Entladung des Netzausfallüberbrückungs-Speichers nicht nur über die Netzgegenspannung an einer Entlade-Richtstrecke (Diode) gesteuert wird, sondern außerdem noch über eine Schaltstrecke nach Maßgabe des Ladezustandes des Speichers. Aufgrund des in Serie mit dem Speicher liegenden Ladewiderstandes und der Speicher-Entladung über die ungesteuerte Richtstrecke (Diode) ist die dem Verbraucher zur Verfügung stehende Spannung aus dem Netz höher als die Speicherspannung, die am Verbraucher erst wirksam wird, wenn die Diode wegen Ausfalles oder jedenfalls starken Abfalles der Netzspannung leitend wird. Dadurch schaltet bei beiden vorbekannten Schaltungen deren Ausgang auf eine verringerte Betriebsspannung, wenn die Fortsetzung des Betriebes nicht aus dem Netz, sondern aus dem Speicher erfolgt. Ein solcher Spannungssprung kann aber im Verbraucher zu Funktionsstörungen führen, etwa wenn es sich um Speisespannung von Registerschaltungen handelt. Deshalb wird in der Schaltungspraxis häufig auf die Entkopplungsdiode im Entladepfad des Speichers verzichtet, wodurch der Speicher unmittelbar am Ausgang liegt und somit den gleichen Spannungspegel führt, wie er vom Netz zur Verfügung gestellt wird. Das vermeidet einen Spannungseinbruch bei Ausfall des Netzes und weist darüberhinaus auch den Vorteil einer ständigen Belastung des aus dem funktionsbereiten Netz gepufferten Speichers auf, was seine Lebensdauer verlängert. Von schwerwiegendem Nachteil ist der Verzicht auf die Entkopplungsdiode im Entladepfad des Speichers aber insofern, als der Schaltungsausgang und damit sowohl das speisende Netz wie auch der Verbraucher kurzgeschlossen werden, wenn der Speicher am Ende seiner Lebenszeit sich nur noch auf eine minimale Restspannung aufladen läßt und schließlich sogar einen internen Kurzschluß annimmt.

In Erkenntnis dieser Gegebenheiten liegt der Erfindung die Aufgabe zugrunde, eine Stromversorgungsschaltung gattungsgemäßer Art dahingehend weiterzubilden, daß einerseits der Netzbetrieb auch nach Ende der Lebensdauer des Überbrückungs-Speichers ungestört beibehalten bleibt und andererseits während des Nennbetriebszustandes des Speichers der Übergang der Versorgung vom Netz auf den Überbrückungsspeicher ohne betriebsstörende Spannungsschwankungen am Schaltungsausgang vollzogen wird.

Diese Aufgabe wird erfindungsgemäß im wesentlichen dadurch gelöst, daß die gattungsgemäße Schaltung gemäß dem Kennungsteil des Anspruches 1 ausgelegt ist.

Nach dieser Lösung ist der Überbrückungs-Speicher wieder über eine Schaltstrecke, aber danach direkt, an den Schaltungsausgang geführt, Die Schaltstrecke ist ständig auf Durchlaß geschaltet, solange die Spannung am Speicher nicht wesentlich abfällt bzw. aufgrund internen Kurzschlusses gänzlich verschwindet. Dazu wird nun die Basis- Vorspannung eines bipolaren Transistors über einen Zenerdioden-Spannungsteiler gewonnen, und zwar sowohl bei Netzbetrieb wie auch bei Speicherbetrieb. Wird die an sich konstante Teiler-Abgriffspannung jedoch emitterseitig unterschritten und damit die Schaltstrecke, insbesondere bei Ende der Lebensdauer des Speichers, gesperrt, dann erfolgt der Betrieb nur noch aus dem Netz, ohne durch den nicht mehr betriebsbereiten (oder gar schon kurzgeschlossenen) Speicher beeinträchtigt zu werden.

Zusätzliche Alternativen und Weiterbildungen wie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche als Schaltbild skizzierten bevorzugten Realisierungsbeispiels zur erfindungsgemäßen Lösung. Die einzige Figur der Zeichnung zeigt eine Stromversorgungsschaltung mit Schutzmaßnahme gegen Kurzschluß einer aus dem Netz gepufferten Funktionsreserve-Batterie.

Der an den Ausgang 1 der Stromversorgungsschaltung 2 angeschlossene Verbraucher 3, etwa eine Schaltuhr, wird über den Schaltungs-Eingang 4 von einem Gleichstrom-Versorgungsnetz 5 über einen Längsregler 6 gespeist. Damit bei Netzausfall keine Unterbrechung des kontinuierlichen Betriebes des Verbrauchers 3 eintritt, also beispielsweise die Schaltuhr im Gangreserve-Betrieb zeitrichtig weiterarbeiten kann, ist dem Ausgang 1 ein Überbrückungs-Speicher 7 - etwa in Form einer Primär- oder Sekundär-Batterie - über eine Schaltstrecke 8 parallel geschaltet, die zum Netz 5 hin über ein Ventil 9 entkoppelt ist. Der Speicher 7 wird aus dem Netz gepuffert, nämlich über einem hinter dem Entkopplungs-Ventil 9 abzweigenden, relativ hochohmigen Ladewiderstand 10, der zwischen dem Speicher 7 und der zum Schaltungsausgang 1 führenden Schaltstrecke 8 angeschlossen ist. Die Schaltstrecke 8 ist als extern gesteuerte Schaltstrecke 8 realisiert, im dargestellten Beispielsfalle als bipolarer Transistor, dessen Kollektor an den Schaltungs-Ausgang 1 und dessen Emitter an den Speicher 7 angeschlossen ist. Die Basis führt an den Steuerabgriff 12 eines hinter dem Entkopplungs-Ventil 9 dem Schaltungseingang 4 parallel-geschalteten Spannungsteilers 13. Damit der Abgriff 12 sowohl bei ordnungsgemäßer Einspeisung des Netzes 5 in den Schaltungs-Eingang 4 wie auch bei Speicherbetrieb sichere Durchsteuerungsspannung für den Transistor 11 liefert, liegt parallel zu dessen Basis-Emitter-Strecke ein Spannungskonstanter 14, der einfach als Zenerdiode 15 realisiert sein kann. Deren Vorwiderstand 16 ist über eine Entkopplungsdiode 17 an den Abgriff 12 gelegt und dient zugleich als Basiswiderstand für einen bipolaren Transistor 18 im Längsregler 6 der Stromversorgungsschaltung 2.

Wenn die Schaltung 2, und damit auch ihr Spannungsteiler 13, vom Netz 5 her - oder vom Speicher 7 aus (nämlich nun über den Widerstand 10) - mit Nennspannung betrieben wird, dann liegt an der Basis des Schaltstrecken-Transistors 11 ein gegenüber der Speicher-Nennspannung hinreichender, von der Zenerdiode 15 stabilisierter, Spannungsabfall für das Durchschalten der über einen Widerstand 19 eingestellten Basis-Emitter-Strecke des Transistors 11, so daß der Speicher 7 über diese aufgesteuerte Schaltstrecke 8 stets an den Ausgang 1 gelegt ist.

Die Verlustspannung über diese aufgesteuerte Schaltstrecke 8 ist sehr viel kleiner als bei einer (ungesteuerten) Dioden-Strecke, so daß die Batterie 7 praktisch nur auf die Nenn-Ausgangsspannung ausgelegt werden muß.

Ein Kurzschluß im Speicher 7, etwa aufgrund Endes der Akku-Lebensdauer, führt nun nicht auch zum Kurzschluß des Ausgangs 1 (und damit zur Überlastung des Netzes 5 aufgrund Überbrückung des Verbrauchers 3), weil dann das Emitter-Potential des Transistors 11 unter das Steuerpotential am Spannungsteiler-Abgriff 12 absinkt und dadurch die Basis-Emitter-Polarität sich umkehrt, der Transistor 11 und somit die Schaltstrecke 8 also nun sperrt. Der Betrieb des Verbrauchers 3 erfolgt somit weiterhin ungestört aus dem Netz 5 - wobei nun lediglich die Betriebsreserve-Funktion des Speichers 7 bei Netzausfall entfällt, weil der Speicher 11 infolge z.B. inneren Kurzschlusses funktionsuntüchtig geworden ist.

## Patentansprüche

1. Stromversorgungsschaltung (2) mit einem Netzausfallüberbrückungs-Speicher (7), der, parallel zu ventilentkoppelter Einspeisung eines Netzes (5), über eine Schaltstrecke (8) auf den Schaltungs-Ausgang (1) geführt ist, die als vom geladenen Speicher (7) stets durchlässig gehaltene aber bei starkem Absinken der Spannung des Speichers (7) sperrende extern gesteuerte Schaltstrecke (8) ausgelegt ist,
dadurch gekennzeichnet,
daß die Schaltstrecke (8) über einen vom Netz (5) und zugleich über einen hochohmigen Widerstand (10) aus dem Speicher (7) gespeisten Spannungsteiler (13) angesteuert ist, wobei der Speicher (7) stets parallel zum ventilentkoppelten Netz (5) über die Schaltstrecke (8) direkt auf den Ausgang (1) geführt ist.

2. Schaltung nach Anspruch 1, dadurch gekennzeichnet, daß an die Schaltstrecke (8) der Abgriff (12) eines Spannungsteilers (13) geführt ist, der sowohl aus dem Netz (5) wie auch aus dem Speicher (7) gespeist ist.

3. Schaltung nach Anspruch 2, dadurch gekennzeichnet, daß der Spannungsteiler (13) mit einem Spannungskonstanter (14) für eine Spannung am Teiler-Abgriff (12) ausgestattet ist, die die Schaltstrecke (8) bei Absinken der Spannung des Speichers (7) sperrt.

4. Schaltung nach einem der vorangehenden Ansprüche, dadurch gekennzeichnet, daß der Vorwiderstand (16) des Spannungsteilers (13) zugleich als Steuerwiderstand für einen Längsregler (6) vor dem Schaltungs-Ausgang (1) ausgelegt ist.

5. Schaltung nach einem der vorgehenden Ansprüche, dadurch gekennzeichnet, daß der Spannungsteiler (13) zwischen seiner Einspeisung und dem Abgriff (12) eine Entkopplungsdiode (17) aufweist.

6. Schaltung nach einem der vorangegangenen Ansprüche, dadurch gekennzeichnet, daß der Widerstand (10) hinter einem eingangsseitigen Entkopplungs-Ventil (9) und andererseits zwischen dem Speicher (7) und der Schaltstrecke (8) angeschlossen ist, und sowohl als Puffer-Ladewiderstand während Netz-Betriebes wie auch als Speisewiderstand für das Aufhalten der Schaltstrecke (8) bei Netzausfall ausgelegt ist.

## Claims

1. A current supply (2) having a mains-failure bridging store (7) which, parallel to rectifier decoupled feed of a mains (5), is conducted onto the circuit output (1) by way of a switching section (8), which is designed as an externally controlled switching section which is at all times kept transmissive by the charged store (7) but which blocks upon a severe drop of the voltage of the store (7), characterised in that the switching section (8) is controlled by way of a voltage divider (13) which is fed from the mains (5) and at the same time by way of a high-impedance resistor (10) from the store (7), in which respect the store (7) is conducted at all times parallel to the rectifier decoupled mains (5) by way of the switching section (8) directly onto the output (1).

2. A circuit according to claim 1, characterised in that the tap (12) of a voltage divider (13), which is fed both from the mains (5) and from the store (7), is conducted onto the switching section (8).

3. A circuit according to claim 2, characterised in that the voltage divider (13) is equipped with a voltage stabiliser (14) for a voltage, at the divider tap (12), which blocks the switching section (8) upon dropping of the voltage of the store (7).

4. A circuit according to one of the preceding claims, characterised in that the series resistor (16) of the voltage divider (13) is at the same time designed as control resistor for a series regulator (6) in front of the circuit output (1).

5. A circuit according to one of the preceding claims, characterised in that the voltage divider (13) has a decoupling diode (17) between its feed and the tap (12).

6. A circuit according to one of the preceding claims, characterised in that the resistor (10) is connected behind an input-sided decoupling rectifier (9) and on the other hand between the store (7) and the switching section (8), and is designed both as buffer charging resistor during mains operation and as feed resistor for the holding back of the switching section (8) upon mains failure.

## Revendications

1. Circuit d'alimentation électrique (2) comportant un accumulateur de pontage de coupure du réseau (7) qui, parallèlement à l'alimentation, désaccouplée par une soupape, d'un réseau (5), est relié à la sortie de circuit (1), par une ligne de commutation (8), qui est conçue sous la forme d'un circuit de commutation (8), maintenu toujours passant par l'accumulateur (7) chargé, mais commandé de l'extérieur, ne laissant plus laisser passer le courant en cas de forte chute de tension de l'accumulateur (7), caractérisé en ce que la ligne de commutation (8) est commandée par un diviseur de tension (13) alimenté par le réseau (5) et en même temps, par l'intermédiaire d'une résistance (16) de valeur élevée, par l'accumulateur (7), l'accumulateur (7) étant toujours relié directement à la sortie (1), parallèlement au réseau (5) désaccouplé par une soupape, par l'intermédiaire de la ligne de commutation (8).

2. Circuit selon la revendication 1, caractérisé en ce que la ligne de commutation (8) est reliée à la prise (12) d'un diviseur de tension (13) qui est alimenté par le réseau (5) ainsi que par l'accumulateur(7).

3. Circuit selon la revendication 2, caractérisé en ce que le diviseur de tension (13) est équipé d'un stabilisateur de tension (14) pour une tension à la prise du diviseur (12) qui ferme la ligne de commutation (8) lorsque la tension de l'accumulateur (7) baisse.

4. Circuit selon l'une des revendications précédentes, caractérisé en ce que la résistance série (16) du diviseur de tension (13) est conçue en même temps comme résistance de commande pour un régulateur longitudinal (6), en amont de la sortie (1) du circuit.

5. Circuit selon l'une des revendications précédentes, caractérisé en ce que le diviseur de tension (13) comporte une diode de découplage (17), entre son alimentation et la prise (12).

6. Circuit selon l'une des revendications précédentes, caractérisé en ce que la résistance (10) est connectée derrière une soupape de découplage (9) côté entrée et d'autre part entre l'accumulateur (7) et la ligne de commutation (8), et est conçue en même temps comme résistance de charge tampon pendant le fonctionnement sur le réseau ainsi que comme résistance d'alimentation pour l'arrêt de la ligne de commutation (8), en cas de coupure du réseau.
